# EUROPÄISCHE PATENTSCHRIFT

(11) **EP 1 339 585 B1**
(45) Veröffentlichungstag und Bekanntmachung des Hinweises auf die Patenterteilung: **14.12.2005**
(21) Anmeldenummer: 01974225.3
(22) Anmeldetag: 31.08.2001
(51) Int. Cl.: B60T 13/68, B60T 7/04, B60T 8/40

(54) **BETÄTIGUNGSEINHEIT FÜR EINE ELEKTROHYDRAULISCHE BREMSANLAGE**
ACTUATOR FOR AN ELECTROHYDRAULIC BRAKING SYSTEM
UNITE D'ACTIONNEMENT POUR SYSTEME DE FREINAGE HYDRAULIQUE

(30) Priorität: 05.09.2000 DE 10043988
(43) Veröffentlichungstag der Anmeldung: 03.09.2003
(73) Patentinhaber: Continental Teves AG & Co. oHG, 60488 Frankfurt am Main (DE)
(72) Erfinder: DROTT, Peter, 65936 Frankfurt/Main (DE); KRÄMER, Horst, 65462 Ginsheim-Gustavsburg (DE); KRANLICH, Holger, 61184 Karben (DE); HOFFMANN, Jan, MI 48309 Rochester Hills (DE)
(86) Internationale Anmeldenummer: PCT/EP2001/010085
(87) Internationale Veröffentlichungsnummer: WO 2002/020323

(56) Entgegenhaltungen:
- EP-A- 0 200 401
- DE-A- 3 413 430
- DE-A- 19 546 647
- DE-A- 19 622 545
- DE-A- 19 632 035
- DE-A- 19 915 832
- DE-A- 19 929 154

## Beschreibung

Die vorliegende Erfindung betrifft eine Betätigungseinheit für eine elektrohydraulische Bremsanlage vom Typ "Brakebywire", bestehend aus einem hydraulischen Druckerzeuger bzw. Hauptbremszylinder sowie einem Wegsimulator, wobei der Hauptbremszylinder mindestens einen mittels eines Betätigungspedals betätigbaren Kolben aufweist und wobei eine mit dem Kolben zusammenwirkende Einrichtung zur Erfassung eines Fahrerverzögerungswunsches vorgesehen ist, die mindestens teilweise in einem Hauptbremszylindergehäuse angeordnet ist und ein ringförmiges Gehäuse aufweist, das den Kolben radial umgreift und in dem Signalaufnehmerelemente angeordnet sind, die mit in dem Kolben angebrachten Signalgeberelementen zusammenwirken.

Eine derartige Betätigungseinheit ist z. B. aus der DE 196 32 035 A1 bekannt. Dem Offenbarungsgehalt der genannten Veröffentlichung ist zu entnehmen, dass sich der elektrische Anschluss des Signalaufnehmers, der als eine Spule ausgebildet ist, im Fahrgastraum des Kraftfahrzeuges befindet. Für eine Signalübertragung zwischen dem Signalaufnehmer und einer im Motorraum des Fahrzeuges angeordneten elektronischen Steuereinheit ist somit ein zusätzlicher Durchbruch der Spritzwand erforderlich. Um ein Eindringen des Spritzwassers in den Fahrgastraum zu verhindern muss dieser Durchbruch angedichtet werden.

Es ist daher Aufgabe der vorliegenden Erfindung, bei einer Betätigungseinheit der eingangs genannten Gattung Maßnahmen vorzuschlagen, die eine einfach und kostengünstig herstellbare elektrische Verbindung zwischen dem Signalaufnehmer und einer sich im Motorraum des Fahrzeuges sich befindende elektronischen Steuereinheit ermöglichen. Außerdem soll eine bezüglich Packaging, Herstellungskosten, Gewicht und Funktion optimierte Baugruppe realisiert werden.

Diese Aufgabe wird erfindungsgemäß dadurch gelöst, dass das Gehäuse mit einem ersten Kabelführungsteil versehen ist, das sich durch einen der Befestigung der Betätigungseinheit an einer Fahrzeugwand dienenden Flansch hindurch erstreckt und dass am Ende des ersten Kabelführungsteiles ein elektrisches Anschlussteil vorgesehen ist.

Eine vorteilhafte Weiterbildung der Erfindung besteht darin, daß der Kolben im Gehäuse geführt wird.

Bei einer weiteren vorteilhaften Ausgestaltung des Erfindungsgegenstandes ist vorgesehen, daß das ringförmige Gehäuse gegenüber dem Hauptbremszylindergehäuse axial vorgespannt ist.

Weitere vorteilhafte Ausführungen sind in den Unteransprüchen 4 bis 13 aufgeführt.

Weitere Einzelheiten, Merkmale und Vorteile der Erfindung gehen aus der nachfolgenden Beschreibung eines Ausführungsbeispiels unter Bezugnahme auf die beiliegende Zeichnung hervor. In der Zeichnung zeigt:
- Fig. 1: eine perspektivische Darstellung einer Ausführung der erfindungsgemäßen Betätigungseinheit; und
- Fig. 2: eine perspektivische Schnittdarstellung der in Fig. 1 gezeigten erfindungsgemäßen Betätigungseinheit.

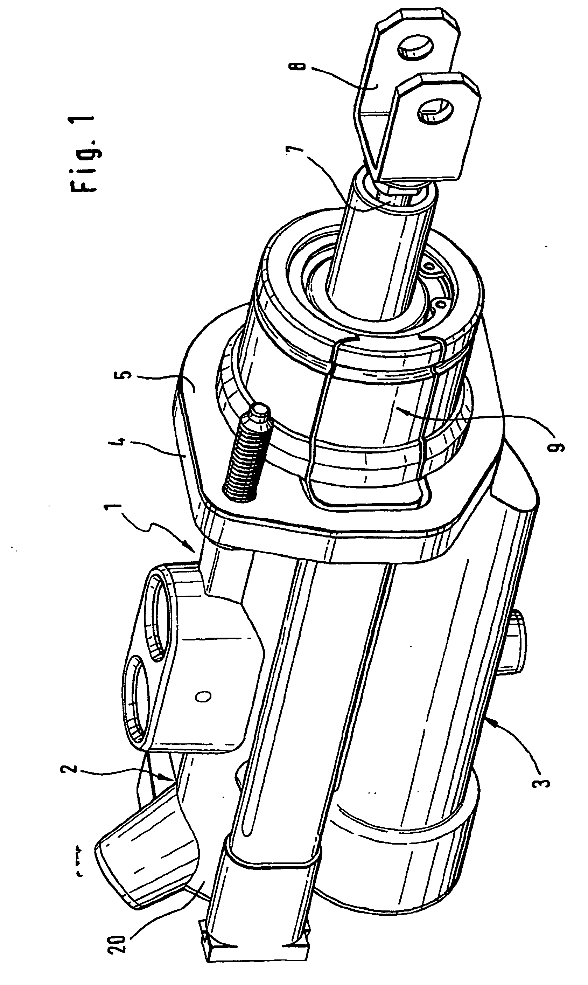

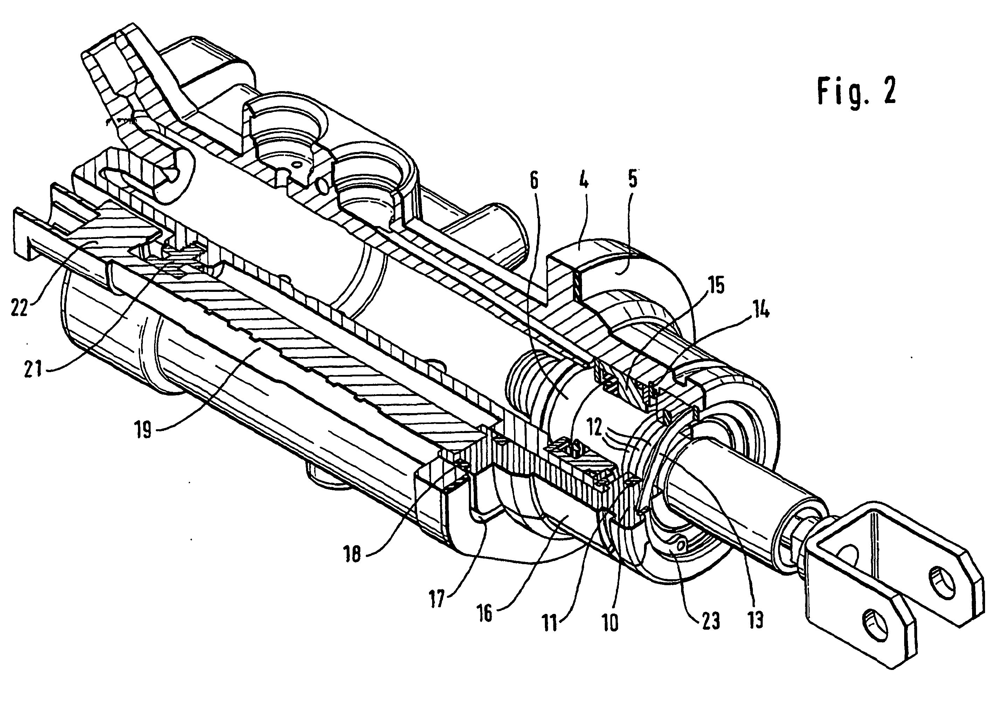

Die in der Zeichnung dargestellte Betätigungseinheit 1 für eine elektrohydraulische Bremsanlage des Typs "Brake-by-wire" besteht im wesentlichen aus einem vorzugsweise zweikreisigen Druckerzeuger bzw. Hauptbremszylinder 2, einem Wegsimulator 3 sowie einem nicht gezeigten, dem Hauptbremszylinder 2 zugeordneten drucklosen Druckmittelvorratsbehälter. Das Hauptbremszylindergehäuse 20 weist einen radialen Flansch 4 auf, der der Befestigung der Betätigungseinheit 1 an einer nicht gezeigten Karosseriewand eines Kraftfahrzeuges dient. Die Befestigung im Fahrzeug erfolgt dabei vorzugsweise derart, daß die in Fig. 1 rechts vom Flansch 4 angeordneten Teile der Betätigungseinheit sich in den Fahrgastraum hinein erstrecken, während die links angeordneten Teile im Motorraum des Kraftfahrzeuges angeordnet sind. Der Abdichtung des Flansches 4 gegenüber der Karosseriewand dient eine Flachdichtung 5. Ein hydraulischer Hauptzylinderkolben 6 (Fig. 2) wird durch eine Kolbenstange 7 betätigt, die mittels eines Gabelkopfes 8 mit einem nicht gezeigten Betätigungs- bzw. Bremspedal gekoppelt ist. Die Betätigungsbewegung der Kolbenstange 7 bzw. des Hauptzylinderkolbens 6 wird mittels einer Einrichtung zur Erfassung eines Fahrerverzögerungswunsches erfaßt, die mit dem Bezugszeichen 9 versehen ist.

Wie insbesondere der Fig. 2 zu entnehmen ist, weist die Einrichtung 9 zur Erfassung eines Fahrerverzögerungswunsches ein ringförmiges Gehäuse 10 auf, das den vorhin erwähnten Kolben 6 radial umgreift bzw. in dem der Kolben 6 geführt wird. Im ringförmigen Gehäuse 10 sind Signalaufnehmerelemente 11 angeordnet, die zusammen mit auf der Kolbenoberfläche angebrachten Signalgeberelementen 12 ein Meßsystem bilden. Das ringförmige Gehäuse 10 stützt sich vorzugsweise unter der Vorspannung einer Feder 13 axial an einem hauptzylindergehäusefesten Anschlag 14 ab, an dem andererseits ein Dichtpaket 15 anliegt, das der Abdichtung des Hauptbremszylinders 2 gegenüber der Atmosphäre dient. Denkbar ist jedoch auch eine Ausführung, bei der das Dichtpaket 15 mit dem ringförmigen Gehäuse 10 einteilig ausgebildet ist. Das ringförmige Gehäuse 10 wird dabei im Hauptbremszylindergehäuse 20 mittels eines Sicherungsringes 23 gesichert, an dem sich die vorhin erwähnte Feder 13 abstützt.

Wie weiterhin aus Fig. 2 erhellt, ist das Gehäuse 10 mit einem ersten Kabelführungsteil 16 versehen, das sich durch eine im Flansch 4 vorgesehene Öffnung 17 hindurcherstreckt und gegenüber dem Flansch 4 mittels einer vorzugsweise radial wirkenden Dichtung 18 abgedichtet ist. Dadurch wird ein Eindringen von Flüssigkeit in den Fahrgastraum ausgeschlossen. Das erste Kabelführungsteil 16 ist dabei vorzugsweise derart gestaltet, daß seine Kontur an die Kontur des in den Fahrgastraum hineinragenden Bereichs des Hauptbremszylindergehäuses 20 angepaßt ist, so daß es z. B. in diesem Bereich auch Zentrieraufgaben erfüllen kann.

An das erste Kabelführungsteil 16 schließt ein zweites Kabelführungsteil 19 an, das sich im wesentlichen parallel zum Hauptzylindergehäuse 20 erstreckt und mittels eines Befestigungselementes 21 daran befestigt ist. Am Ende des zweiten Kabelführungsteiles 19 ist, insbesondere im Bereich seiner Befestigung am Hauptzylindergehäuse 20, eine elektrische Schnittstelle bzw. ein elektrisches Anschlußteil 22 angeordnet. Es ist selbstverständlich auch eine Ausführung denkbar, bei der das elektrische Anschlußteil direkt an das erste Kabelführungsteil 16 angeschlossen ist. Eine vorteilhafte Ausführung sieht vor, daß das ringförmige Gehäuse 10, die beiden Kabelführungsteile 16, 19 sowie das elektrische Anschlußteil 22 aus Kunststoff bestehen und einteilig ausgebildet sind. Schließlich ist auch eine nicht gezeigte Modifikation denkbar, bei der zwischen dem Hauptbremszylindergehäuse 20 und der Kolbenstange 7 ein faltenbalgartiges Dichtelement vorgesehen ist. Bei dieser Variante ist es besonders sinvoll, wenn die vorhin erwähnte Flachdichtung 5 einteilig mit dem Dichtelement ausgebildet ist.

## Patentansprüche

1. Betätigungseinheit (1) für eine elektrohydraulische Bremsanlage vom Typ "Brake-by-wire", bestehend aus einem hydraulischen Druckerzeuger bzw. Hauptbremszylinder (2) sowie einem Wegsimulator (3) wobei der Hauptbremszylinder (2) mindestens einen mittels eines Betätigungspedals betätigbaren Kolben (6) aufweist und wobei eine mit dem Kolben (6) zusammenwirkende Einrichtung zur Erfassung eines Fahrerverzögerungswunsches vorgesehen ist, die mindestens teilweise in einem Hauptbremszylindergehäuse (20) angeordnet ist und ein ringförmiges Gehäuse (10) aufweist, das den Kolben (6) radial umgreift und in dem Signalaufnehmerelemente (11) angeordnet sind, die mit in dem Kolben angebrachten Signalgeberelementen (12) zusammenwirken, **dadurch gekennzeichnet, dass** das Gehäuse (10) mit einem ersten Kabelführungsteil (16) versehen ist, das sich durch einen der Befestigung der Betätigungseinheit (1) an einer Fahrzeugwand dienenden Flansch (4) hindurch erstreckt und dass am Ende des ersten Kabelführungsteiles (16) ein elektrisches Anschlussteil (22) vorgesehen ist.

2. Betätigungseinheit nach Anspruch 1 **dadurch gekennzeichnet, daß** der Kolben (6) im Gehäuse (10) geführt wird.

3. Betätigungseinheit nach Anspruch 1, **dadurch gekennzeichnet, daß** das ringförmige Gehäuse (10) gegenüber dem Hauptbremszylindergehäuse (20)axial vorgespannt ist.

4. Betätigungseinheit nach einem der Ansprüche 1 bis 3 **dadurch gekennzeichnet, dass** das erste Kabelführungsteil (16) gegenüber dem Flansch (4) radial abgedichtet ist.

5. Betätigungseinheit nach einem der Ansprüche 1 bis 4 **dadurch gekennzeichnet, dass** das erste Kabelführungsteil (16) derart geformt ist, dass seine Kontur in einem festgelegten Winkelbereich der Kontur eines in einen Fahrgastraum eines Kraftfahrzeuges hineinragenden Bereichs des Hauptbremszylindergehäuses (20) entspricht.

6. Betätigungseinheit nach einem der Ansprüche 1 bis 5 **dadurch gekennzeichnet, dass** zwischen dem ersten Kabelführungsteil (16) und dem Anschlußteil (22) ein zweites Kabelführungsteil (19) angeordnet ist, das sich parallel zum Hauptbremszylindergehäuse (20) erstreckt.

7. Betätigungseinheit nach Anspruch 6 **dadurch gekennzeichnet, dass** das zweite Kabelführungsteil (19) in der Nähe des Anschlussteiles (22) am Hauptbremszylindergehäuse (20) befestigt ist.

8. Betätigungseinheit nach Anspruch 6 oder 7 **dadurch gekennzeichnet, dass** das Gehäuse (10), das erste Kabelführungsteil (16), das zweite Kabelführungsteil (19) sowie das Anschlussteil (22) einteilig ausgebildet sind.

9. Betätigungseinheit nach Anspruch 6, 7 oder 8 **dadurch gekennzeichnet, dass** das Gehäuse (10), das erste Kabelführungsteil (16), das zweite Kabelführungsteil (19) sowie das Anschlussteil (22) aus Kunststoff (20) bestehen.

10. Betätigungseinheit nach einem der vorhergehenden Ansprüche **dadurch gekennzeichnet, dass** das Gehäuse (10) vollständig im Hauptbremszylindergehäuse angeordnet ist, während das erste sowie das zweite Kabelführungsteil (16,19) zumindest teilweise außerhalb des Hauptbremszylindergehäuses (20) angeordnet sind.

11. Betätigungseinheit nach einem der vorhergehenden Ansprüche, wobei der Hauptbremszylinderkolben gegenüber dem Hauptbremszylindergehäuse mittels eines Dichtpakets abgedichtet ist, **dadurch gekennzeichnet, daß** das Dichtpaket mit dem ringförmigen Gehäuse einteilig ausgebildet ist.

12. Betätigungseinheit nach einem der vorhergehenden Ansprüche 1 bis 11 **dadurch gekennzeichnet, dass** der Flansch (4) gegenüber der Fahrzeugwand mittels einer Flachdichtung (5) abgedichtet ist.

13. Betätigungseinheit nach einem der vorhergehenden Ansprüche, wobei der Hauptbremszylinderkolben mittels einer mit dem Betätigungspedal gekoppelten Kolbenstange betätigbar ist und wobei zwischen der Kolbenstange und dem Hauptbremszylindergehäuse ein Dichtelement vorgesehen ist, **dadurch gekennzeichnet, dass** die Flachdichtung mit dem Dichtelement einteilig ausgebildet ist.

## Claims

1. Actuator (1) for an electro-hydraulic brake system of the 'brake-by-wire' type comprised of a hydraulic pressure generator or master brake cylinder (2) and a travel simulator (3), with said master brake cylinder (2) including at least one piston (6) that is operable by an actuating pedal, and wherein a device for detecting a driver's deceleration wish is provided, said device cooperating with piston (6) and being at least partly arranged in a master brake cylinder housing (20) and having an annular housing (10) that embraces the piston (6) in a radial direction and accommodates signal receiving elements (11) which cooperate with signal transmitting elements (12) mounted in the piston,
**characterized in that** the housing (10) includes a first cable guide part (16) extending through a flange (4) that is used to attach the actuator (1) to a vehicle wall, and **in that** an electric connector part (22) is provided at the end of the first cable guide part (16).

2. Actuator as claimed in claim 1,
**characterized in that** the piston (6) is guided in the housing (10).

3. Actuator as claimed in claim 1,
**characterized in that** the annular housing (10) is axially preloaded in relation to the master brake cylinder housing (20) .

4. Actuator as claimed in any one of claims 1 to 3,
**characterized in that** the first cable guide part (16) is sealed radially in relation to the flange (4) .

5. Actuator as claimed in any one of claims 1 to 4,
**characterized in that** the first cable guide part (16) is shaped so that its contour in a determined angular area corresponds to the contour of an area of the master brake cylinder housing (20) that extends into a passenger compartment of a motor vehicle.

6. Actuator as claimed in any one of claims 1 to 5,
**characterized in that** interposed between the first cable guide part (16) and the connector part (22) is a second cable guide part (19) that extends in parallel to the master brake cylinder housing (20).

7. Actuator as claimed in claim 6,
**characterized in that** the second cable guide part (19) is attached to the master brake cylinder housing (20) near the connector part (22).

8. Actuator as claimed in claim 6 or 7,
**characterized in that** the housing (10), the first cable guide part (16), the second cable guide part (19), as well as the connector part (22) have an integral design.

9. Actuator as claimed in claim 6, 7, or 8,
**characterized in that** the housing (10), the first cable guide part (16), the second cable guide part (19), and the connector part (22) are made of plastic material (20).

10. Actuator as claimed in any one of the preceding claims,
**characterized in that** the housing (10) is arranged completely in the master brake cylinder housing, while the first and the second cable guide part (16, 19) are at least partially arranged outside the master brake cylinder housing (20).

11. Actuator as claimed in any one of the preceding claims, wherein the master brake cylinder piston is sealed in relation to the master brake cylinder housing by means of a packing,
**characterized in that** the packing is integrally designed with the annular housing.

12. Actuator as claimed in any one of the preceding claims 1 to 11,
**characterized in that** the flange (4) is sealed in relation to the vehicle wall by means of a flat seal (5).

13. Actuator as claimed in any one of the preceding claims, wherein the master brake cylinder piston is operable by means of a piston rod coupled to the actuating pedal and wherein a sealing element is provided between the piston rod and the master brake cylinder housing,
**characterized in that** the flat seal is integrally designed with the sealing element.

## Revendications

1. Unité d'actionnement (1) pour un système de freinage électro-hydraulique du type freiner-par-fil, constituée d'un générateur de pression hydraulique ou d'un cylindre de frein principal (2) ainsi que d'un simulateur de course (3), le cylindre de frein principal (2) comportant au moins un piston pouvant être actionné au moyen d'une pédale d'actionnement et un dispositif, coopérant avec le piston (6), étant prévu pour détecter un souhait de ralentissement du conducteur, lequel dispositif est disposé au moins en partie dans un boîtier (20) du cylindre de frein principal et comporte un boîtier (10) de forme annulaire qui entoure radialement le piston (6) et dans lequel sont disposés des éléments récepteurs de signaux (11) qui coopèrent avec des éléments transmetteurs de signaux (12) placés dans le piston, **caractérisée en ce que** le boîtier (10) est pourvu d'un premier élément de guidage de câble (16) qui s'étend à travers une bride (4) servant à la fixation de l'unité d'actionnement (1) sur une paroi d'un véhicule, et **en ce qu'**à l'extrémité du premier élément de guidage de câble (16) est prévu un élément de raccordement électrique (22).

2. Unité d'actionnement selon la revendication 1, **caractérisée en ce que** le piston (6) est guidé dans le boîtier (10).

3. Unité d'actionnement selon la revendication 1, **caractérisée en ce que** le boîtier (10) de forme annulaire est précontraint axialement par rapport au boîtier (20) du cylindre de frein principal.

4. Unité d'actionnement selon l'une des revendications 1 à 3, **caractérisée en ce que** le premier élément de guidage de câble (16) est rendu étanche radialement par rapport à la bride (4)

5. Unité d'actionnement selon l'une des revendications 1 à 4, **caractérisée en ce que** le premier élément de guidage de câble (16) est formé de manière que son contour corresponde, dans une plage angulaire définie, au contour d'une zone du boîtier (20) du cylindre de frein principal, qui pénètre à l'intérieur de l'habitacle d'un véhicule automobile.

6. Unité d'actionnement selon l'une des revendications 1 à 5, **caractérisée en ce qu'**un deuxième élément de guidage de câble (19), qui s'étend parallèlement au boîtier (20) du cylindre de frein principal, est disposé entre le premier élément de guidage de câble (16) et l'élément de raccordement (22).

7. Unité d'actionnement selon la revendication 6, **caractérisée en ce que** le deuxième élément de guidage de câble (19) est fixé à proximité de l'élément de raccordement (22), sur le boîtier (20) du cylindre de frein principal.

8. Unité d'actionnement selon la revendication 6 ou 7, **caractérisée en ce que** le boîtier (10), le premier élément de guidage de câble (16), le deuxième élément de guidage de câble (19) ainsi que l'élément de raccordement (22) sont réalisés d'une pièce.

9. Unité d'actionnement selon la revendication 6, 7 ou 8, **caractérisée en ce que** le boîtier (10), le premier élément de guidage de câble (16), le deuxième élément de guidage de câble (19) ainsi que l'élément de raccordement (22) sont en matière plastique (20).

10. Unité d'actionnement selon l'une des revendications précédentes, **caractérisée en ce que** le boîtier (10) est entièrement disposé dans le boîtier du cylindre de frein principal, tandis que le premier ainsi que le deuxième élément de guidage de câble (16, 19) sont disposés au moins en partie à l'extérieur du boîtier (20) du cylindre de frein principal.

11. Unité d'actionnement selon l'une des revendications précédentes, dans laquelle le piston du cylindre de frein principal est rendu étanche par rapport au boîtier du cylindre de frein principal au moyen d'un paquet d'étanchéité, **caractérisée en ce que** le paquet d'étanchéité est réalisé d'une seule pièce avec le boîtier de forme annulaire.

12. Unité d'actionnement selon l'une des revendications 1 à 11 précédentes, **caractérisée en ce que** la bride (4) est rendue étanche par rapport à la paroi du véhicule au moyen d'une garniture d'étanchéité plate (5).

13. Unité d'actionnement selon l'une des revendications précédentes, dans laquelle le piston du cylindre de frein principal peut être actionné au moyen d'une tige de piston couplée à la pédale d'actionnement, et dans laquelle un élément d'étanchéité est prévu entre la tige de piston et le boîtier du cylindre de frein principal, **caractérisée en ce que** la garniture d'étanchéité plate est réalisée d'une seule pièce avec l'élément d'étanchéité.
